# EUROPEAN PATENT APPLICATION

(11) **EP 1 884 805 A1**
(43) Date of publication of application: **06.02.2008**
(21) Application number: 06300845.2
(22) Date of filing: 01.08.2006
(51) Int. Cl.: G02B 1/06, G02B 3/14

(54) **Liquid lens with four liquids**

(71) Applicant: Varioptic, 69007 Lyon (FR)
(72) Inventor: BERGE, Bruno, 69002 Lyon (FR); CRAEN, Pierre, 69002 Lyon (FR); LECLERC, Christophe, 69003 Lyon (FR)
(74) Representative: de Beaumont, Michel

(57) **Abstract**

The invention concerns a variable focus liquid lens (400) comprising a structure forming first and second chambers, an optical path through said lens passing through both chambers, said first chamber containing a first insulating liquid (401) and a first conducting liquid (402), said first liquids being immiscible and having a first refractive interface (406) and said second chamber containing a second insulating liquid (404) and a second conducting liquid (403), said second liquids being immiscible and having a second refractive interface (408), the curvature of the first and second refractive interfaces being variable by electrowetting by application of voltages to a plurality of electrodes, wherein the first and second chambers are separated by a partition (413) traversing said optical path, said partition being transparent in the region of said optical path, and comprising a first electrode (416, 422) of said plurality of electrodes arranged to contact one of said first and second conducting liquids.

## Description

### FIELD OF THE INVENTION

The present invention relates to an electrowetting device, and in particular to a variable focus liquid lens module, the focus being variable by electrowetting.

### BACKGROUND OF THE INVENTION

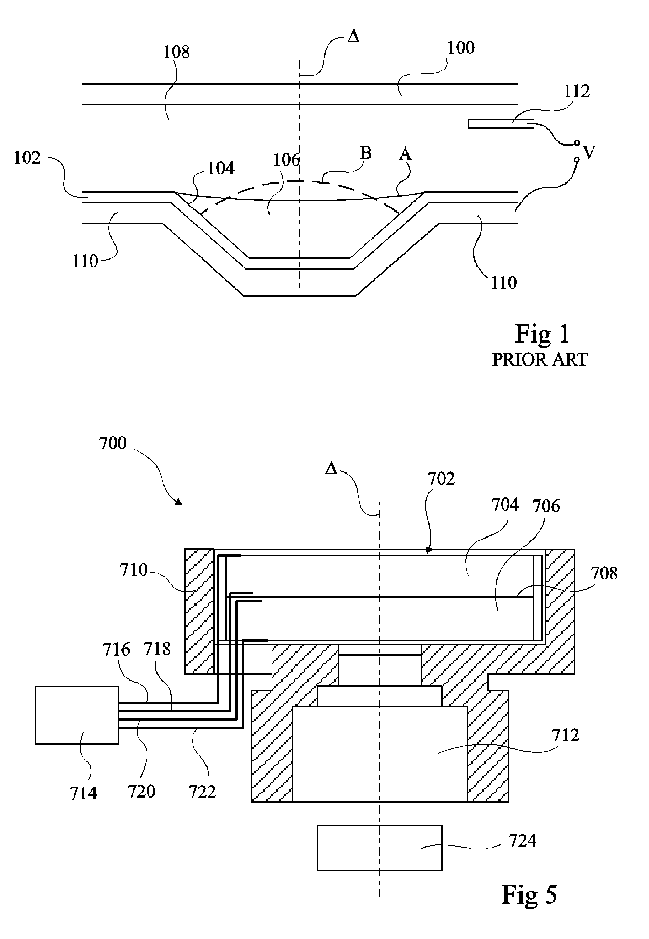

A number of embodiments of variable focus liquid lenses are described in European patent N°1166157. Figure 1 of the present application corresponds to Figure 12 of that patent and illustrates an example of a variable focus liquid lens according to the prior art. As shown in Figure 1, the variable focus lens comprises a fluid chamber with two insulating transparent plates 100 and 102 and an optical axis Δ. Plate 102 comprises a conical or cylindrical recess, with a side face 104 inclined with respect to the optical axis Δ of the device, and which receives a drop of a first liquid which is an insulating liquid 106. The remainder of the chamber extending up to transparent plate 100 is filled with a second liquid 108, which is a conducting liquid. The liquids are immiscible, and have different refraction indexes but roughly the same density, forming a refractive interface or meniscus (A, B). A transparent electrode 110 is formed over the side surface of insulating plate 102. Another electrode 112 is provided in contact with the second liquid 108.

Due to the electrowetting effect, it is possible, by applying a voltage between electrodes 110 and 112, to change the curvature of the interface between the first liquid 106 and the second liquid 108, for example, from an initial concave shape as shown by line A, to a convex shape as shown by line B. Thus rays of light passing through the cell perpendicular to the plates 100 and 102 in the region of the drop 106 will be focused more or less depending on the voltage applied.

In order to provide a lens with sufficient power for providing a zoom function and/or that allows the correction and/or minimization of aberrations at the same time as focusing, a lens having two variable refractive interfaces is often necessary. However, placing a pair of variable focus liquid lenses, for example as described above in relation to Figure 1, next to each other on the optical axis is disadvantageous as this would result in a lens arrangement that is bulky, particularly along the optical axis. Thus there is a need for a compact lens arrangement, which is powerful enough to satisfy the above requirements.

### SUMMARY OF THE INVENTION

It is one object of the present invention to provide an electrowetting device and method for manufacturing the same which at least partially addresses the above needs described with relation to the prior art.

According to a first aspect of the present invention there is provided a variable focus liquid lens comprising a structure forming first and second chambers, an optical path through the lens passing through both chambers, the first chamber containing a first insulating liquid and a first conducting liquid, the first liquids being immiscible and having a first refractive interface and the second chamber containing a second insulating liquid and a second conducting liquid, the second liquids being immiscible and having a second refractive interface, the curvature of the first and second refractive interfaces being variable by electrowetting by application of voltages to a plurality of electrodes, wherein the first and second chambers are separated by a partition traversing the optical path, the partition being transparent in the region of the optical path, and comprising a first electrode of the plurality of electrodes arranged to contact one of the first and second conducting liquids.

According to some embodiments of the present invention the partition comprises a second electrode arranged to contact the second conducting liquid.

According to a further aspect of the present invention, there is provided a zoom lens arrangement comprising at least two of the variable focus liquid lenses as described above arranged in series along an optical axis (Δ) of the zoom lens arrangement.

According to a further aspect of the present invention, there is provided a camera module comprising a lens arrangement comprising the variable focus liquid lens as described above and/or the zoom lens arrangement described above, and a plurality of fixed lenses arranged in series along an optical axis (Δ) of the camera module; drive circuitry for controlling the variable focus liquid lens; and an image sensor for capturing an image received via the lens arrangement.

According to a further aspect of the present invention, there is provided a mobile phone comprising the camera module as described above.

According to yet a further aspect of the present invention, there is provided a method of assembling a variable focus liquid lens, comprising: providing a partition comprising a first electrode on a first surface of the partition; assembling the lens such that the partition separates first and second chambers of the liquid lens; inserting a first conducting liquid and a first insulating liquid into the first chamber such that the first conducting liquid contacts the first electrode, the first liquids being immiscible; sealing the first chamber; inserting a second conducting liquid and a second insulating liquid into the second chamber, the second liquids being immiscible; and sealing the second chamber.

Further objects, features and advantages of the present invention will become apparent from the following detailed description of exemplary preferred embodiments, when considered together with the accompanying figures of drawing.

### BRIEF DESCRIPTION OF THE DRAWINGS

In the drawings:
Figure 1 (described above) illustrates an embodiment of a liquid lens comprising liquids movable with respect with each other by electrowetting;
Figure 2A illustrates a cross-section view of a liquid lens according to a first exemplary embodiment of the present invention;
Figure 2B illustrates part of the lens of Figure 2A in more detail;
Figure 3A illustrates a cross-section view of a liquid lens according to a second exemplary embodiment of the present invention;
Figure 3B illustrates part of the lens of Figure 3A in more detail;
Figure 4 illustrates a lens module according to an embodiment of the present invention; and
Figure 5 illustrates a camera module incorporating a lens module according to an embodiment of the present invention.

For clarity, throughout the figures, like reference numbers have been used for corresponding features. The figures are not drawn to scale.

### DETAILED DESCRIPTION OF THE INVENTION

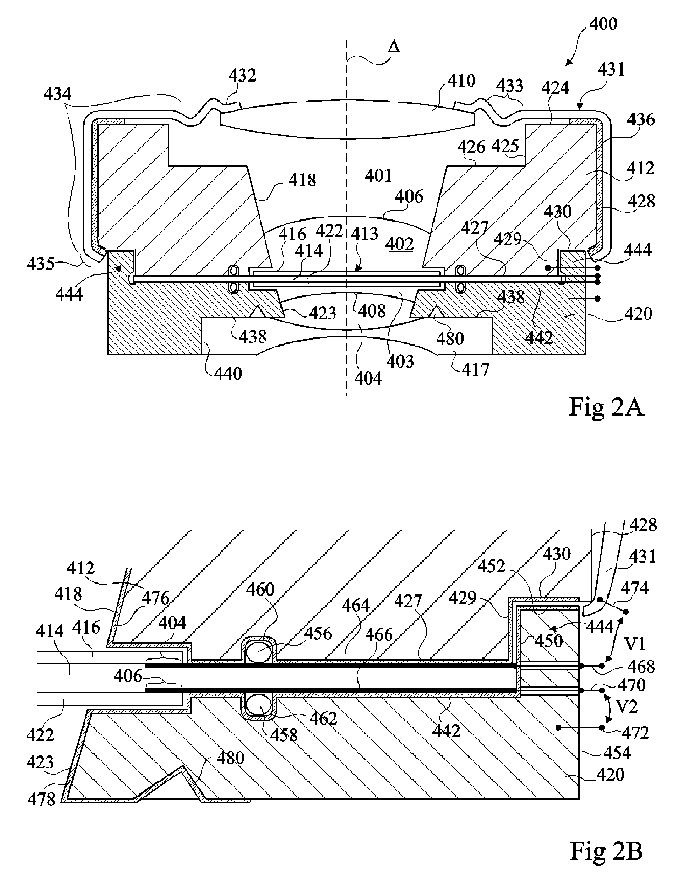

Figures 2A and 2B illustrate, in cross-section, a first embodiment of a liquid lens 400 having two variable liquid interfaces. In particular, with reference to Figure 2A, lens 400 comprises a first volume of a first liquid 401, a second volume of a second liquid 402, a third volume of a third liquid 403 and a fourth volume of a fourth liquid 404. Liquids 401, 402 are immiscible and in the present embodiment comprise an insulating liquid and a conducting liquid respectively. Liquids 403, 404 are also immiscible and in the present embodiment respectively comprise a conducting liquid and an insulating liquid. Liquids 401, 404 are for example oil-based. Liquids 402, 403 for example comprise water mixed with an electrolyte such as salt. The densities of liquids 401, 402 are preferably approximately equal, as are the densities of the liquids 403, 404.

Liquids 401, 402 define a first interface 406 where they meet, the curvature of interface 406 being controllable by electrowetting. Likewise, liquids 403, 404 define a second interface 408 where they meet, the curvature of interface 408 being controllable by electrowetting. The refractive indexes of the liquids 401 to 404 are chosen such that interfaces 406, 408 have the properties of a lens of the required power range.

Liquids 401, 402 are contained in a first chamber formed of a structure that in this embodiment comprises a biconvex lens 410, a first body portion 412, and a partition 413 comprising a plate 414 and a first transparent electrode 416 covering a central region of one surface of the glass plate that makes electrical contact with liquid 402. Body portion 412 in this embodiment comprises a conducting material such as steel, and forms a first annular electrode of the liquid lens. Body portion 412 has an inner surface 418 which is preferably the shape of a truncated cone and which is rotationally symmetrical the optical axis Δ of the lens. The term "truncated cone" is used throughout the present specification to mean having the shape of a segment of a cone without the pointed end, and cut through planes perpendicular to the cones axis of rotational symmetry. Inner surface 418 is covered by an insulating layer (not shown in Figure 2A) which prevents direct electrical contact between body portion 412 and liquid 402. Plate 414 is for example a glass planar window, and transparent electrode 416 is for example a very thin layer of a conducting material coated on the surface of plate 414 facing into the first chamber.

Partition 413 separates the first chamber from a second chamber containing liquids 403, 404. The second chamber is formed of a structure that for example comprises a biconcave lens 417, a second body portion 420, in this embodiment forming a second annular electrode and the partition 413 which comprises a further transparent electrode 422 on the opposite side of plate 414 to transparent electrode 416, and that makes electrical contact with liquid 403. Body portion 420 in this embodiment comprises a conducting material such as steel and acts as a second annular electrode for the second chamber. Body portion 420 has an inner surface 423, which is preferably the shape of a truncated cone and rotationally symmetrical the optical axis Δ of the lens. Inner surface 423 is covered by an insulating layer (not shown in Figure 2A) which prevents direct electrical contact between body portion 420 and liquid 403. As with transparent electrode 416, transparent electrode 422 is for example a very thin layer of a conducting material coated on the surface of plate 414 facing into the second chamber.

In the embodiment of Figure 2A, the cone-shaped inner surfaces 418, 423 of body portions 412, 420 respectively are inclined in the same direction with respect to the optical axis Δ, in other words they are both widest at their ends closest to the biconvex lens 410, and narrowest at their ends closest to the biconcave lens 417, and in this example the inner surfaces are aligned such that together they form part of a common truncated cone.

Body portion 412 in this example has a top surface comprising an annular surface 424 furthest from optical axis Δ and substantially perpendicular to the optical axis Δ of the lens, a further annular surface 426 which is also substantially perpendicular to the optical axis Δ of the lens, but inside surface 425, and separated from surface 425 by a further annular surface 425 substantially parallel to the optical axis Δ of the lens. Body portion 412 further comprises a bottom surface 427 that contacts the plate 414, which is perpendicular to the optical axis Δ of the lens. Body portion 412 also has an annular side surface 428 facing away from the optical axis of the lens, which is substantially parallel to the optical axis Δ of the lens. An alignment groove comprising surfaces 429, 430 is provided in body portion 412 where the side surface 428 and the bottom surface 427 meet, this groove being used for aligning body portion 412 with body portion 420, as will be described in more detail below.

The biconvex lens 410 is held by a cap 431, which for example comprises a sheet of metal stamped into a shape having surfaces rotationally symmetrical to the optical axis Δ of the lens. In particular, the cap 431 is preferably shaped such that in cross-section it comprises a lip 432 contacting the edge of the refractive outer or inner surface of biconvex lens 410 and defining a circular opening centered on the optical axis Δ allowing light to enter the lens. Lens 410 is for example attached by glue to this lip, or directly sealed by selectively heating the lip to locally melt the lens 410 to create the seal. Outwardly from lip 432, an S-shaped portion 433 is preferably provided that allows some movement of biconvex lens 410 in a direction parallel to the optical axis Δ to compensate for expansion or contraction of liquids 401, 402. Outwardly of portion 433, an L-shaped portion 434 is provided having a first limb extending adjacent to the top surface 424 of body portion 412 and a second limb extending adjacent to the side surface 428 of body portion 412, and a curved edge 435 curving towards the optical axis Δ and contacting a corner of body portion 412, that is for example pressed or crimped to keep the cap in position. A seal is provided between the cap 431 and body portion 412 to tightly seal liquids 401, 402 in the first chamber, the seal comprising an L-shaped gasket 436 sandwiched between the inner surface of the corner of the L-shaped cap portion and the corner between the top surface 424 and the side 428 of body portion 412.

In the present embodiment, body portion 420 comprises an opening in its underside for receiving the biconcave lens 417, the opening comprising an annular surface 438 perpendicular to the optical axis Δ of the lens 400 and an annular surface 440 parallel to the optical axis Δ. Body portion 420 is for example glued to surfaces 438, 440 with glue, or directly sealed by selectively heating the edges of the opening that receives the lens.

Body portion 420 comprises a top surface 442 that contacts with plate 414. In order to ensure accurate alignment between body portion 412 and body portion 420, an alignment portion 444 is provided that protrudes from the top surface 442 of body portion 420 into the alignment groove provided in the body portion 412.

With reference to Figure 2B, the interface between body portions 412, 420 and the edge of partition 413 is shown in more detail. The alignment groove in body portion 412 comprises surface 429 extending into body portion 412 from the bottom surface 427 approximately parallel to the optical axis Δ of the lens, and surface 430 extending from surface 429 to the side surface 428 of body portion 412. In the present embodiment the alignment groove extends around the whole perimeter of the lens, although in alternative embodiments it could be provided around just a part of the perimeter. The alignment portion 444 in the body portion 420 comprises a first surface 450 extending up from the top surface 442 of body portion 420 approximately parallel to the optical axis Δ of the lens, and a second surface 452 approximately perpendicular to the optical axis Δ and extending from surface 450 to a side surface 454 of body portion 420. Again, the alignment portion 444 preferably extends around the whole perimeter of the lens, but in alternative embodiments could extend only part way around the perimeter.

Body portions 412, 420 are thus preferably aligned by contact between surface 429 of the alignment groove and surface 450 of the alignment portion 444, and preferably also by contact between surface 430 of the alignment groove and the second surface 452 of the alignment portion 444.

As shown in detail in Figure 2B, a first o-ring 456 is provided making a tight seal between plate 414 and the body portion 412 and a second o-ring 458 is provided making a tight seal between the plate 414 and body portion 420, o-rings 456, 458 fitting into respective first and second o-ring grooves 460, 462. O-ring groove 460 is positioned on the bottom surface 427 of body portion 412 at a point between inner edge 418 and surface 429 of the alignment groove. O-ring groove 462 is positioned on the top surface 442 of body portion 420 at a point between the inner surface 423 and surface 450 of the alignment portion 444.

Electrode grooves are provided for receiving transparent electrodes 416, 422 of partition 413 which protrude slightly from the surface of the plate 414. A first is provided in the bottom surface 427 of body portion 412 and a second in the top surface 442 of body portion 420, for receiving the transparent electrodes 416, 422 respectively, these grooves extending a short distance into each electrode from inner surfaces 418, 423 respectively. In alternative embodiments transparent electrodes 416, 422 could extend all the way to the alignment portion 444, and thus no groove would be provided.

In order for voltages to be provided to transparent electrodes 416, 422, metal tracks 464 and 466 respectively are provided. These tracks 464, 466 are for example thin metal coatings applied in a narrow track to the surface of the plate 414 and extending to the outer edge of the partition, where they contact first and second wires 468 and 470 respectively. In the present embodiment holes are provided in the alignment protrusion 444 such that wires 468, 470 are provided to the outer edge of the lens. A third wire 472 is provided that makes electrical contact with body portion 420. A fourth wire 474 is provided that makes electrical contact with cap 431, which in turn is in electrical contact with body portion 412 at corner 435.

An insulating layer 476 is provided in this embodiment coving inner surface 418, the surface of the electrode groove and the bottom surface 427 of body portion 412, as well as surfaces 429, 430 of the alignment groove. Insulating layer 476 thus insulates body portion 412 from electrical contact with the second liquid 402, the transparent electrode 416, the metal track 464 and body portion 420. Likewise, in this embodiment an insulating layer 478 is provided covering body portion 420, insulating it from electrical contact with liquid 403, the transparent electrode 422, the metal track 466 and body portion 412.

In alternative embodiments, further metal tracks could be provided on surfaces 429, 430 and/or on surfaces 450, 452, for connecting tracks 464, 466 to the edge of the lens respectively. These further metal tracks are provided at different points in the circumference of the lens so that they are spaced apart and do not make electrical contact with each other.

The S-shaped portion 433 in the cap 431 compensates for changes in the volume of liquids 401, 402, for example due to changes in temperature or pressure, and such pressure compensation means are described in more detail in co-pending European Application No. EP1662276, which is hereby incorporated by reference to the extent allowable by the law.

Expansion of liquids 403, 404 in the second chamber is compensated by an expansion chamber 480. Expansion chamber 480 is a V-shaped groove in surface 438 of body portion 420, and is partly filled by liquid 404, and partly by air. The expansion chamber 480 preferably extends in a circle around the lens, but in alterative embodiments could extend just part way round the lens. A narrow channel is provided between the second chamber and the expansion chamber 480 allowing liquid to partly fill the expansion chamber due to capillary action when the lens is assembled and the liquids inserted into the lens. This channel then allows the level of liquid in the expansion chamber to vary depending on the heat and/or pressure that the lens is subjected to during its lifetime. In alternative embodiments of lens 400 different expansion chamber arrangements could be used. Such expansion chambers are described in detail in co-pending European Application No. EP 06115595, which is hereby incorporated by reference to the extent allowable by the law.

In operation, a first voltage V1 is applied between wires 468, 474, and thus between transparent electrode 416 and the body portion 412. The wettability of the inner surface 418 by liquid 402 is thus changed, allowing the curvature of interface 406 to be controlled. A second voltage V2 is applied between wires 470, 472, changing the wettability of the inner surface 423 of body portion 420 by liquid 403 and thus allowing the curvature of interface 408 to be controlled. The voltages V1 and V2 are preferably oscillating (AC) voltages, and for example vary in the range between 0 and 120 V RMS, depending on the required curvature.

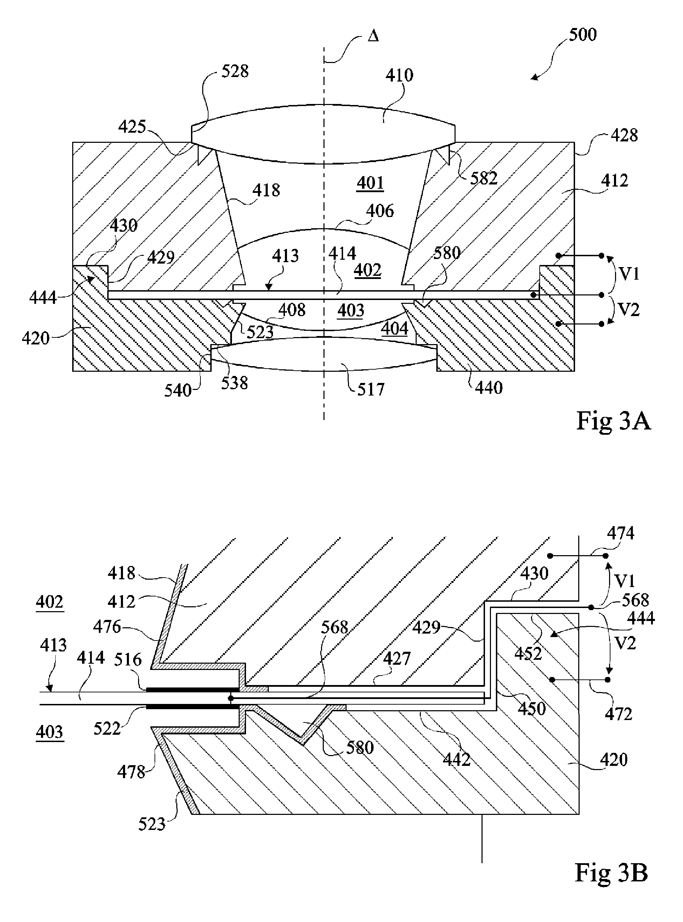

Figures 3A and 3B illustrate an alternative embodiment of a liquid lens 500 having first and second chambers, the first containing the same two liquids 401 and 402 and the second containing the same two liquids 403 and 404 as described above, the liquids providing two refractive interfaces 406, 408, one in each chamber. In Figures 3A and 3B, those features that are the same as features in Figures 2A and 2B have been labelled with like reference numerals, and will not be described again in detail.

Whilst in the embodiment of Figure 2A the inner surfaces 418, 423 of body portions 412, 420 were truncated cone shaped and both inclined in the same direction with respect to the optical axis Δ, in the embodiment of Figure 3A the inner surfaces are also truncated cone shaped but are inclined in opposite directions. In particular, inner surface 418 shown in Figure 3A is inclined in the same way as surface 418 of Figure 2A, such that it is widest at its end closest to the biconvex lens 410, whereas inner surface 523 is inclined in the opposite direction to inner surface 423 of Figure 2A, such that it is narrowest at its end closest to the biconvex lens 410. This arrangement is preferable where it is required that interfaces 406, 408 have opposite curvatures at zero volts in a configuration insulating liquid, conducting liquid, conducting liquid, insulating liquid, along the optical axis.

In the embodiment of Figure 3A, no cap 427 is provided, and instead biconvex lens 410 is glued or directly sealed by selective welding directly to inner edge 425 of body portion 412. Methods of directly sealing fixed lenses or windows are described in detail in co-pending European Patent Application No. EP05112671, which is hereby incorporated by reference to the extent allowable by the law. In this embodiment, edge 425 includes an expansion chamber 582 for compensating for expansion of liquids 401, 402, this expansion chamber being the same as chamber 480 described above.

Biconcave lens 417 has been replaced by a biconvex lens 517 in the embodiment of Figure 3A, this lens being secured to an opening in body portion 420, and in particular to an annular surface 538 perpendicular to the optical axis Δ of the lens 500 and an annular surface 540 parallel to the optical axis. Partition 413 of Figure 3A is shown in more detail in Figure 3B. As shown, the first and second transparent electrodes 416, 422 are replaced in the embodiment of Figure 3A by annular disc-shaped electrodes 516, 522, which for example comprise gold. As with the previous example, electrode grooves are provided extending into body portions 412, 420 from surfaces 418, 523 respectively, alongside annular electrodes 516, 522. In this embodiment the surface of the electrode grooves are spaced from the annular electrodes 516, 522 thus allowing liquids 402, 403 to enter the grooves and contact the electrodes 516, 522 respectively. Furthermore, in this embodiment the annular electrodes 516, 522 preferably do not extend into the first and second chambers beyond the inner edges of the electrode grooves, and thus the diameter of the opening through the lens is not reduced by these electrodes, which in this example are opaque.

The annular disc-shaped electrodes 516, 522 are for example glued or applied by a CVD (chemical vapour deposition) coating to respective sides of plate 414. Whereas in Figure 2B metal tracks 464, 466 were provided for connecting to the transparent electrodes 416, 422, in the embodiment of Figure 3B a single wire 568 is provided for connecting both the annular electrodes 516, 522 to a terminal at the edge of the liquid lens, and in this embodiment wire 568 is positioned in a groove on the surface of or a hole in plate 414, and then through a groove provided in the surfaces 450, 452 of the alignment protrusion 444. Both annular electrodes 516, 522 are connected to a common wire, and thus to a common voltage. Further wires 472 and 474 are provided connected to body portions 420, 412 respectively. Voltage V1 for controlling the curvature of interface 406 is applied between the wires 568 and 474, and voltage V2 for controlling the curvature of interface 408 is applied between wires 568 and 472.

Sealing of body portions 412, 420 to annular electrodes 516, 522 and partition 413, is achieved in the embodiment of Figure 3A with glue.

An expansion chamber 580 is provided for compensating expansion of liquids 403, 404, extending into body portion 420 from surface 442. In the embodiment of Figure 3B, insulating layers 476, 478 extend only a short distance from edges 418, 423 respectively, towards the edge of the lens, and prevent electrical contact between liquids 401, 403 and body portions 412, 420. The surfaces of the alignment portion 444 and/or the alignment groove are preferably coated with an insulating layer to prevent electrical contact between the body portions 412, 420.

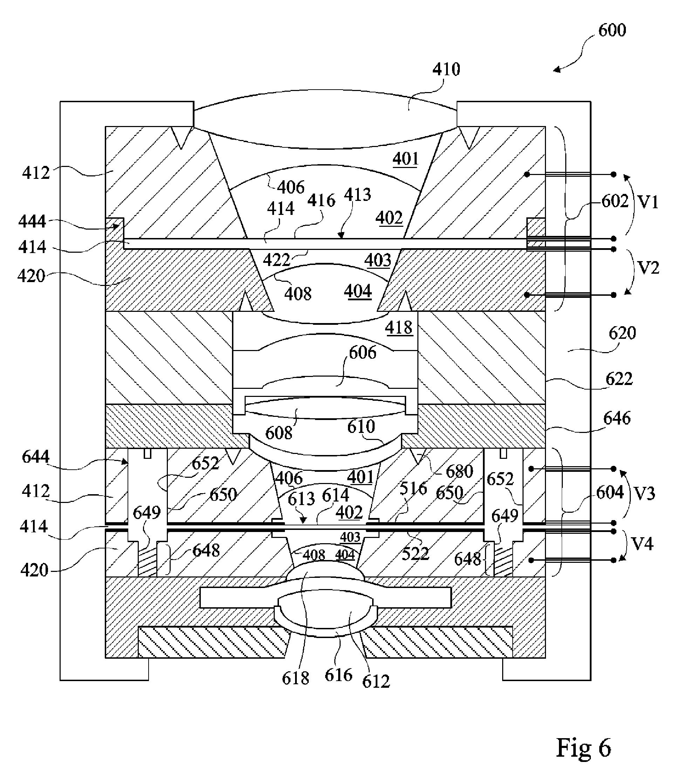

Figure 4 illustrates a lens arrangement 600, in this example providing a zoom lens with variable focus, comprising first and second liquid lenses 602, 604, each being a liquid lens similar to the lenses 400 and 500 described above. Liquid lens 602 is similar to the embodiment of Figure 2A, and comprises a biconvex lens 410, a biconcave lens 417, and a partition 413, however in this embodiment the first and second transparent electrodes 416, 422 extend across the whole partition 413, covering the surface of plate 414.

Liquid lens 604 has a number of differences with respect to the previously described embodiments. In particular, lenses 410 and 417 have been replaced by a meniscus lens 610 and a convex-concave lens 618 respectively. Furthermore, partition 413 has been replaced by a partition 613 formed of a flexible membrane 614 and two annular disc-shaped electrodes 516, 522, which are the same as the disc-shaped electrodes described in relation to Figure 3A except that they extend all the way to the outside edge of the body portions 412, 420. Membrane 614 is sandwiched between the two annular electrodes 516, 522, except in a central region between the first and second chambers where it is not held by the electrodes 516, 522, and thus it is free to move and can compensate for changes in the volumes of the liquids between the first and second chambers. Only one expansion chamber 680 is therefore provided for the whole of the second liquid lens 604.

Liquid lens 604 comprises alternative means to the alignment portion 444 described with respect to Figures 2A and 3A for aligning the body portions 412, 420. In this embodiment a number of cylindrical metal bolts are provided for this alignment, two of which, labelled 644 and 646, are shown in Figure 4. These bolts each comprise a threaded region 648 which screws into a corresponding threaded region in a hole 649 in body portion 420 arranged to receive the bolt. The bolts also comprise a smooth region 650, this region having precise dimensions such that it fits tightly into a hole 652 provided in body portion 412 and part way into body portion 420. Thus once the bolts have been secured via their threaded regions to body portion 420, the smooth region of each bolt contacts with the inner surface of hole 652 and thus serve to align body portion 412 with body portion 420. The smooth region 650 and corresponding hole 652 is preferably of a larger diameter then the threaded region 648. To ensure that body portions 412, 420 remain electrically insulated, bolts 644, 646 are preferably formed of an insulating material such as nylon or a ceramic, or bolts are of metal but the surfaces of the bolts 644, 646 and/or holes 649, 652 are coated with an insulating material such as a ceramic.

The lens arrangement 600 further comprises two fixed lenses 606, 608 centred on the optical axis Δ between liquid lenses 602, 604, lens 606 being for example an aspherical lens having a planar side, and having an annular rim that protrudes on the planar side for receiving lens 608 which is for example a biconvex lens. A further biconvex lens 612 and a meniscus lens 616 are provided, the biconvex lens 612 being positioned such that one of its convex faces contacts the concave face of the meniscus lens. Lenses 612 and 616 are centered on the optical axis, and positioned along the optical axis Δ after the second liquid lens 604.

A lens housing 620 is provided that serves both the role of holding liquid lenses 602, 604 and the various fixed lenses in position, as well as aligning these lenses. In particular, the housing 620 has an inner surface 622 which is cylindrical and parallel to the optical axis Δ of the lens. This inner surface 622 contacts with side surfaces of the body portions 412, 420 of each of liquid lenses 602, 604 and with the side surfaces of annular supports provided for supporting the fixed lenses and thus aligns these components along the optical axis.

Thus the lens arrangement 600 comprises eight fixed lenses in total, and four liquid refractive interfaces of variable curvature. In operation, each refractive interface is preferably controlled to perform a specific function. For example, interfaces 406, 408 of liquid lens 602 are controlled by drive voltages V1 and V2 respectively to provide a zoom, interface 406 of the liquid lens 604 is controlled by a drive voltage V3 to provide correction of back focal variation, and interface 408 of liquid lens 604 is driven by drive voltage V4 to provide focusing. The combination of the interfaces 406, 408 of liquid lens 602 and interface 406 of liquid lens 604 for example provide correction of chromatic and/or field curvature aberrations.

The difference between the refractive indexes of the liquids at each interface of the liquid lenses will in part determine the power of the lens. For implementing the zoom function, liquids 401, 402 of the first liquid lens 602 preferably have a difference between their refractive indexes that is greater than 0.2, for example in the range of 0.2 to 0.5, and liquids 403, 404 preferably have a difference between their refractive indexes that is less that 0.2, for example in the range of 0.05 to 0.2. These differences are for example the differences in refractive indexes or light having a wavelength of approximately 587 nm, which corresponds to the visible light spectrum, in air.

The lens arrangement 600, or embodiments of the liquid lens as described herein, can be incorporated in a large variety of systems in which there is a need for miniaturized variable focal length lens, such as, for example, digital cameras, mobile phones, endoscope systems, barcode readers, personal digital organisers, etc. An optical device for example comprises an embodiment of a liquid lens of camera module as described herein arranged to focus an image on an image sensor, for example a CMOS sensor. Control voltages are provided to the liquid lenses by driving circuitry, which is for example controlled by a microprocessor or an image signal processor. Images captured by the image sensor are used by the processing means to determine what focusing or aberration correction is required, such that the required control signals can be generated.

Figure 5 schematically illustrates one example of a camera module 700 of an optical device incorporating a lens 702 of variable focal length having at two refractive liquid interfaces, one on each of first and second chambers 704, 706 separated by a partition 708. Lens 702 is a lens according to embodiments of the present invention, for example lens 400, 500, 602 or 604 as described above. The optical device 700 is, for example, a digital camera, a mobile phone, a microscope or the like. The optical device comprises a mount 710 that holds the variable focus lens 702 and a group 712 of fixed lenses. The device further comprises a control block 714 for controlling the lens 702, the control block 714 being connected to the first and second electrodes of each chamber of the lens 702 through the connections 716, 718, 720, 722. In this example, the partition between the chambers of the liquid lens comprises an electrode in each chamber that receives an independent voltage. However, if the lens 500 of Figure 3A for example were incorporated in the camera module 700, a common voltage would be applied to the electrodes on the partition, and thus only three connections would be required to the lens 702 from the control block 714, connections 718, 720 being just one common connection. An image sensor 724 is provided for capturing images received via the lenses 702 and 712. Lenses 702, 712 and image sensor 724 are aligned with an optical axis Δ of the camera module.

The liquid lenses 400, 500, 602, 604 can be assembled for example by firstly positioning the partition 413, 613 between the body portions 412, 420, and inserting the liquids 401, 402 into position in the first chamber with the conducting liquid in contact with electrode 416, 516. These liquids can then be sealed by gluing or directly sealing lens 410 in position, or by crimping cap 431 in position with lens 410 already fixed to lip 432. The liquids 403, 404 can then be inserted into the second chamber with the conducting liquid in contact with electrode 422, 522, and lens 417, 517 glued or directly sealed in position to seal the lens.

Thus embodiments of a liquid lens have been described having two chambers each containing two liquids, one conducting and one non-conducting, an interface in each chamber between the two liquids providing a variable refractive interface that can be controlled by electrowetting. The first and second chambers are separated by a partition. Advantageously, the partition comprises at least one electrode arranged to make electrical contact with one of the conducting liquids. This provides a low cost solution for forming the electrode as the partition incorporating the electrode can be manufactured separately before being assembled with the rest of the lens, i.e. sealed between the body portions of the lens.

The applicant has found that providing four liquids in a liquid lens that are arranged in an order along the optical axis having an insulating liquid, followed by a conducting liquid, followed by a further conducting liquid, followed by a further insulating liquid, works particularly well. This is because such an arrangement facilitates the correction of aberrations between the interfaces, as any astigmatism introduced by the first insulating/conducting liquid interface can be more easily corrected by the second conducting/insulating liquid interface. This arrangement is also preferable in that the conducting liquids are either side of the partition between the chambers of the lens and this enables the partition to comprise one or more electrodes as described herein in order to make electrical contact with the conducting liquids.

The inner surface 418, 423, 523 in contact with the edges of the liquid interface in each chamber is preferably inclined such that it is cone-shaped and preferably has an incline of between approximately 10 and 15 degrees with respect to the optical axis Δ of the lens, this incline improving the range of contact angles possible between liquid interface and the inner surface 418, 423, 523, and thus improving the range of curvatures of the interface.

In some in embodiments one or both of the electrodes comprised in the partition are preferably inset in the sides of the inner surfaces 418, 423 of the body portions, and a gap is preferably provided adjacent to one or both electrodes allowing the conducting liquids to make electrical contact with the electrodes. Thus the width of the optical path through the lens is not reduced by the electrodes.

Whilst body portions 412, 420 have been described as being annular and comprised of a conducting material, such as steel, such that the whole body forms an electrode, in alternative embodiments only the inner surfaces 418, 423, 523 of the body portions 412, 420 could be formed of conducting material and thus form the electrode, coated by an insulating material, and the rest of each body portion formed of an alternative material such as nylon or glass.

Whilst a number of specific examples of embodiments of the liquid lens according to the present invention have been described above, there are numerous variations that will be apparent to those skilled in the art.

For example, whilst a partition 413 comprising a planar glass plate 414 has been described separating the first and second chambers of the liquid lenses in some embodiments, in alternative embodiments this partition could be replaced by a fixed lens, for example a concave lens or a convex lens.

Whilst embodiments have been described in which the partition comprises an electrode for both the first and second chambers of the lens 400, 500, 602, 604, in alternative embodiments the partition could comprise an electrode for just one of these chambers, a further electrode being provided for the other chamber via the cap in figure 2A for example, if the liquid 401 were conducting and liquid 402 insulating, or by means of a pin entering the chamber.

Whilst embodiments have been described comprising two chambers separated by a partition 413, in alternative embodiments more chambers could be provided in a line along the optical axis, each having a liquid interface of variable curvature, and each separated from the next by a partition similar to or the same as partition 413.

Whilst in some embodiments o-rings or glue are used to seal the parts of the liquid lens, in alternative embodiments either of these methods can be employed, or alternatively the parts could be welded together.

The liquid lenses have been described as comprising one or more expansion chambers for compensating for any expansion of the liquids. In alternative embodiments such expansion chambers may not be necessary, and where such compensation is necessary, an expansion chamber or a lens cap comprising an S-shaped portion can be provided.

Whilst certain embodiments have been described having combinations of advantageous features, in alternative embodiments these features can be combined in any combination.

Having thus described at least one illustrative embodiment of the invention, various alterations, modifications and improvements will readily occur to those skilled in the art. Such alterations, modifications and improvements are intended to be within the scope of the invention. Accordingly, the foregoing description is by way of example only and is not intended to be limiting. The invention is limited only as defined in the following claims and the equivalent thereto.

## Claims

1. A variable focus liquid lens (400, 500, 600) comprising a structure forming first and second chambers, an optical path through said lens passing through both chambers, said first chamber containing a first insulating liquid (401) and a first conducting liquid (402), said first liquids being immiscible and having a first refractive interface (406) and said second chamber containing a second insulating liquid (404) and a second conducting liquid (403), said second liquids being immiscible and having a second refractive interface (408), the curvature of the first and second refractive interfaces being variable by electrowetting by application of voltages to a plurality of electrodes, wherein the first and second chambers are separated by a partition (413, 613) traversing said optical path, said partition being transparent in the region of said optical path, and comprising a first electrode (416, 516, 422, 522) of said plurality of electrodes arranged to contact one of said first and second conducting liquids.

2. The variable focus liquid lens of claim 1 wherein said first electrode (416, 516) is arranged to contact said first conducting liquid and wherein said partition (413, 613) further comprises a second electrode (422, 522) arranged to contact said second conducting liquid.

3. The variable focus liquid lens of claim 1 or 2 wherein said partition (413) comprises a plate (414), and said first electrode comprises a transparent electrode covering a surface of said plate.

4. The variable focus liquid lens of claim 1 or 2 wherein said first electrode comprises an annular disc-shaped electrode.

5. The variable focus liquid lens of claim 1 or 2 wherein said partition comprises a flexible membrane (614).

6. The variable focus liquid lens of any preceding claim, wherein said first conducting liquid and said first insulating liquid have a difference between their refractive indexes greater than or equal to 0.2.

7. The variable focus liquid lens of any preceding claim wherein said second conducting liquid and said second insulating liquid have a difference between their refractive indexes in the range of 0.05 to 0.2.

8. The variable focus liquid lens of any preceding claim comprising a first body portion (412) having a first inner surface (418) arranged to center said first interface (406) and a second body portion (420) having a second inner surface (423, 523) arranged to center said second interface (408), said first and second body portions each comprising an alignment surface (429, 450, 649, 652) for aligning said first and second body portions with each other.

9. The variable focus liquid lens of claim 8 wherein said alignment surface of said first body portion comprises a first hole (652) and said alignment surface of said second body portion comprises a second hole (649), said first and second holes being aligned with each other by a bolt (650) arranged to pass through said first and second holes.

10. The variable focus liquid lens of claim 8 wherein said alignment surfaces (429, 450) are arranged to contact each other such that said first and second body portions are aligned.

11. The variable focus liquid lens of claim 8 wherein said first and second inner surfaces are each shaped in the form of a truncated cone centered on an optical axis Δ of the lens.

12. The variable focus liquid lens of claim 11 wherein said first and second inner surfaces are inclined in a same direction with respect to a central axis of the lens.

13. The variable focus liquid lens of claim 11 wherein said first and second inner surfaces are inclined in opposite directions with respect to a central axis of the lens.

14. A zoom lens arrangement comprising at least two of the variable focus liquid lenses of any preceding claim arranged in series along an optical axis (Δ) of the zoom lens arrangement.

15. A camera module comprising:
a lens arrangement comprising the variable focus liquid lens of any of claims 1 to 13 and a plurality of fixed lenses arranged in series along an optical axis (Δ) of the camera module;
drive circuitry for controlling the variable focus liquid lens; and
an image sensor for capturing an image received via the lens arrangement.

16. The camera module of claim 15 comprising the zoom lens of claim 14, said zoom lens comprising said lens arrangement.

17. A mobile phone comprising the camera module of claim 15 or 16.

18. A method of assembling a variable focus liquid lens, comprising:
providing a partition (413, 613) comprising a first electrode (416, 516, 422, 522) on a first surface of said partition;
assembling said lens such that said partition separates first and second chambers of said liquid lens;
inserting a first conducting liquid (402, 403) and a first insulating liquid (401, 404) into said first chamber such that said first conducting liquid contacts said first electrode, said first liquids being immiscible;
sealing said first chamber;
inserting a second conducting liquid (403, 402) and a second insulating liquid (404, 401) into said second chamber, said second liquids being immiscible; and
sealing said second chamber.

19. The method of claim 17 wherein said step of forming said partition further comprising forming a partition having a second electrode (422, 522) on a second surface of said partition, and wherein said second conducting liquid is inserted such that it contacts said second electrode.
